# EUROPÄISCHE PATENTANMELDUNG

(11) **EP 1 371 533 A2**
(43) Veröffentlichungstag der Anmeldung: **17.12.2003**
(21) Anmeldenummer: 03450142.9
(22) Anmeldetag: 10.06.2003
(51) Int. Cl.: B60S 13/00

(54) **Fahrzeug-Anschubvorrichtung**

(30) Priorität: 10.06.2002 AT 8772002
(71) Anmelder: Moosbrugger, Gottlieb, 4656 Kirchham (AT)
(72) Erfinder: Moosbrugger, Gottlieb, 4656 Kirchham (AT)
(74) Vertreter: Gibler, Ferdinand, Dipl.-Ing. Dr. techn.

(57) **Zusammenfassung**

Anschubvorrichtung mit einer Befestigungsvorrichtung (1), welche mit einem ersten Hebelarm (2) verbunden ist, einem Antriebsmittel (54), welches von einer Antriebseinheit (52) antreibbar ist, und einem zweiten Hebelarm (3), wobei der erste Hebelarm (2) und der zweite Hebelarm (3) mittels eines Gelenkes (51) miteinander verbunden sind, wobei das Antriebsmittel (54) mit einem Ende (31) des zweiten Hebelarmes (3) verbunden ist, und daß der erste Hebelarm (2) und der zweite Hebelarm (3) mittels einer Spannvorrichtung (4) gegeneinander spannbar sind.

## Beschreibung

Die Erfindung betrifft eine Anschubvorrichtung mit einer Befestigungsvorrichtung, welche mit einem ersten Hebelarm verbunden ist, einem Antriebsmittel, welches von einer Antriebseinheit antreibbar ist, und einem zweiten Hebelarm.

In der US 3 417 833 A wird eine Anschubvorrichtung geoffenbart, welche einen kurzen Hebelarm mit einer Befestigungsvorrichtung und einen langen Hebelarm mit einem Griff aufweist, wobei an der starren Verbindungsstelle der beiden Hebelarme eine antreibbare Achse angeordnet ist, welche endseitig mit zwei Rädern verbunden ist. Durch Herunterdrücken des Griffes kann ein mit der Befestigungsvorrichtung verbundenes Fahrzeug angehoben und anschließend verschoben werden.

Nachteilig an einer Anschubvorrichtung gemäß der US 3 417 833 A ist, daß das Fahrzeug mittels Muskelkraft angehoben werden muß, wodurch ältere und schwächere Personen oftmals ein Fahrzeug nicht verschieben können. Weiters ist nachteilig, daß ein Fahrzeug nur mit Schrittgeschwindigkeit verschoben werden kann, da die Bedienperson, die den Griff herunterdrückt mit der Anschubvorrichtung mitgehen muß. Ein weiterer Nachteil ist, daß bei einer Kurvenfahrt eine zweite Bedienperson zur Betätigung der Lenkung des Fahrzeuges vorhanden sein muß.

Aufgabe der Erfindung ist es eine Anschubvorrichtung der eingangs genannten Art anzugeben, bei der diese bekannten Nachteile vermieden werden, mit der ein Gegenstand schnell aus einem Gefahrenbereich entfembar ist.

Eine weitere Aufgabe der Erfindung ist es, eine Anschubvorrichtung anzugeben, bei der eine Bedienperson die erfindungsgemäße Anschubvorrichtung und gegebenenfalls eine Lenkung od. dgl. des anzuschiebenden Gegenstandes betätigen kann, wobei sich die Bedienperson während des Anschiebens außerhalb eines Gefahrenbereiches befinden kann.

Eine weitere Aufgabe der Erfindung ist es, eine Anschubvorrichtung der eingangs genannten Art anzugeben, welche einfach herstellbar ist, geringe Abmaße aufweist und leicht transportiert werden kann.

Erfindungsgemäß wird dies dadurch erreicht, daß der erste Hebelarm und der zweite Hebelarm mittels eines Gelenkes miteinander verbunden sind, wobei das Antriebsmittel mit einem Ende des zweiten Hebelarms verbunden ist, und daß der erste Hebelarm und der zweite Hebelarm mittels einer Spannvorrichtung gegeneinander spannbar sind.

Dadurch ergibt sich der Vorteil, daß die erforderliche Reibung des Antriebsmittels gegen den Untergrund od. dgl. mit der Spannvorrichtung erzeugbar ist, wobei keine Bedienperson während des Anschiebens im Bereich der Anschubvorrichtung sein muß, wodurch die erreichbare Geschwindigkeit nicht auf Schrittgeschwindigkeit beschränkt ist. Ein weiterer Vorteil ist, daß die Bedienperson während des Anschiebens im oder am anzuschiebenden Gegenstand sein kann, wodurch der Gegenstand eine Schutzwirkung für die Bedienperson ausübt.

In Weiterbildung der Erfindung kann vorgesehen sein, daß die Spannvorrichtung eine mit dem ersten Hebelarm im wesentlichen gelenkig und um die Längsachse drehfest verbundene erste Gewindestange und eine mit dem zweiten Hebelarm im wesentlichen gelenkig und um die Längsachse drehfest verbundene zweite Gewindestange aufweist, wobei die erste Gewindestange ein Rechtsgewinde und die zweite Gewindestange ein Linksgewinde oder die erste Gewindestange ein Linksgewinde und die zweite Gewindestange ein Rechtsgewinde aufweisen, und daß ein Federelement, insbesondere eine Schraubenfeder od. dgl., vorgesehen ist, welches drehbar mit der ersten Gewindestange und der zweiten Gewindestange verbunden ist. Diese Ausbildung stellt eine einfache und robuste Ausbildung der Spannvorrichtung dar, welche aufgrund der Gewindestangen schnell verstellbar und aufgrund des Federelementes gegenüber Erschütterungen, Bodenunebenheiten od. dgl. nachgiebig ist.

Gemäß einer anderen Ausführungsform der Erfindung kann vorgesehen sein, daß mit dem Federelement ein Einstellelement, insbesondere ein Ratschenelement, ein Elektromotoer od. dgl., verbunden ist. Durch das Einstellelement kann ein einfaches und schnelles Festziehen und/oder Lösen der Spannvorrichtung sichergestellt werden.

In weiterer Ausgestaltung der Erfindung kann vorgesehen sein, daß ein Dämpferelement zur Begrenzung des Federweges des Federelementes vorgesehen ist. Mittels des Dämpferelementes kann ein Schwingen der erfindungsgemäßen Anschubvorrichtung verhindert werden. Weiters kann durch das Dämpferelement die Bewegung des Federelementes begrenzt werden, wodurch Beschädigungen aufgrund einer großen Stauchung oder Dehnung des Federelementes vermieden werden können.

In Weiterführung der Erfindung kann die Spannvorrichtung mit dem ersten Hebelarm lösbar an wenigstens zwei Positionen des ersten Hebelarms und/oder die Spannvorrichtung mit dem zweiten Hebelarm lösbar an wenigstens zwei Positionen des zweiten Hebelarms festlegbar sein. Durch diese Ausbildung kann die erfindungsgemäße Anschubvorrichtung auf einfache Weise an unterschiedliche anzuschiebende Gegenstände, wie z.B. Pkws, Busse od. dgl. adaptiert werden.

Gemäß einer anderen Ausführungsform der Erfindung kann vorgesehen sein, daß die Befestigungsvorrichtung eine stirnseitige Ausnehmung aufweist. Durch diese Ausgestaltung kann die erfindungsgemäße Anschubvorrichtung in einfacher Weise mit der Befestigungsvorrichtung auf ein gegengleiches Halteelement aufgesteckt werden.

In weiterer Ausgestaltung der Erfindung kann vorgesehen sein, daß im Bereich der Befestigungsvorrichtung ein erster Anschluß an einen externen Energiespeicher, insbesondere einer Batterie eines Kraftfahrzeuges, einer Lichtmaschine od. dgl., und/oder ein zweiter Anschluß für eine Fernbedienung der Antriebseinheit vorgesehen ist. Durch den ersten Anschluß und den zweiten Anschluß kann auf einfache Weise die Energieversorgung und die Steuerbarkeit der erfindungsgemäßen Anschubvorrichtung sichergestellt werden.

In Weiterbildung der Erfindung kann vorgesehen sein, daß der zweite Hebelarm als Teleskopstange ausgebildet ist. Durch die Teleskopstange kann die erfindungsgemäße Anschubvorrichtung für den Einsatz mit verschiedenen anzuschiebenden Gegenständen adaptiert werden.

Gemäß einer anderen Ausbildung der Erfindung kann vorgesehen sein, daß eine Halterung für einen Energiespeicher vorgesehen ist. Aufgrund der Halterung für einen Energiespeicher kann die erfindungsgemäße Anschubvorrichtung unabhängig von einem externen Energiespeicher betrieben werden.

Gemäß einer weiteren Ausführungsform der Erfindung kann vorgesehen sein, daß ein Getriebe zwischen dem Antriebsmittel und der Antriebseinheit angeordnet ist. Durch das Getriebe kann die Leistung der Antriebseinheit geeignet auf das Antriebsmittel übertragen werden.

In weiterer Ausgestaltung der Erfindung kann vorgesehen sein, daß das Antriebsmittel als Rad und/oder als Kettenantrieb ausgebildet ist. Mittels eines Rades und/oder eines Kettenantriebes kann auf einfache Weise ein kontinuierliches Anschieben des Gegenstandes sichergestellt werden.

Gemäß einer weiteren Ausführungsform der Erfindung kann vorgesehen sein, daß die Antriebseinheit als Motor, insbesondere als Elektromotor, ausgebildet ist. Durch einen Motor, insbesondere einen Elektromotor, kann die erforderliche Leistung auf einfache Weise bereitgestellt werden.

Die Erfindung betrifft weiters eine Haltevorrichtung für eine oben genannte Anschubvorrichtung.

Aufgabe der Erfindung ist es, eine Haltevorrichtung anzugeben, welche einfach aufgebaut ist und mit einem anzuschiebenden Gegenstand schnell und sicher verbindbar ist.

Erfindungsgemäß wird dies dadurch erreicht, daß ein Befestigungselement zum Befestigen an einem anzuschiebenden Gegenstand, insbesondere der Bodenplatte oder dem Rahmen eines Kraftfahrzeuges, einer Hebebühne od. dgl., und ein Halteelement zur lösbaren Verbindung mit der Befestigungsvorrichtung der Anschubvorrichtung vorgesehen ist.

Dadurch ergibt sich der Vorteil, daß die Haltevorrichtung fest mit dem Gegenstand und lösbar mit der erfindungsgemäßen Anschubvorrichtung verbindbar ist, wobei die Haltevorrichtung den Gegenstand gegebenenfalls nur geringfügig überragt.

Die Erfindung wird unter Bezugnahme auf die beigeschlossenen Zeichnungen, in welchen Ausführungsformen dargestellt sind, näher beschrieben. Dabei zeigt:
Fig. 1 schematisch eine erfindungsgemäße Anschubvorrichtung in Seitenansicht;
Fig. 2 eine Seitenansicht einer erfindungsgemäßen Haltevorrichtung; und
Fig. 3 eine Draufsicht auf die Haltevorrichtung gemäß Fig. 2.

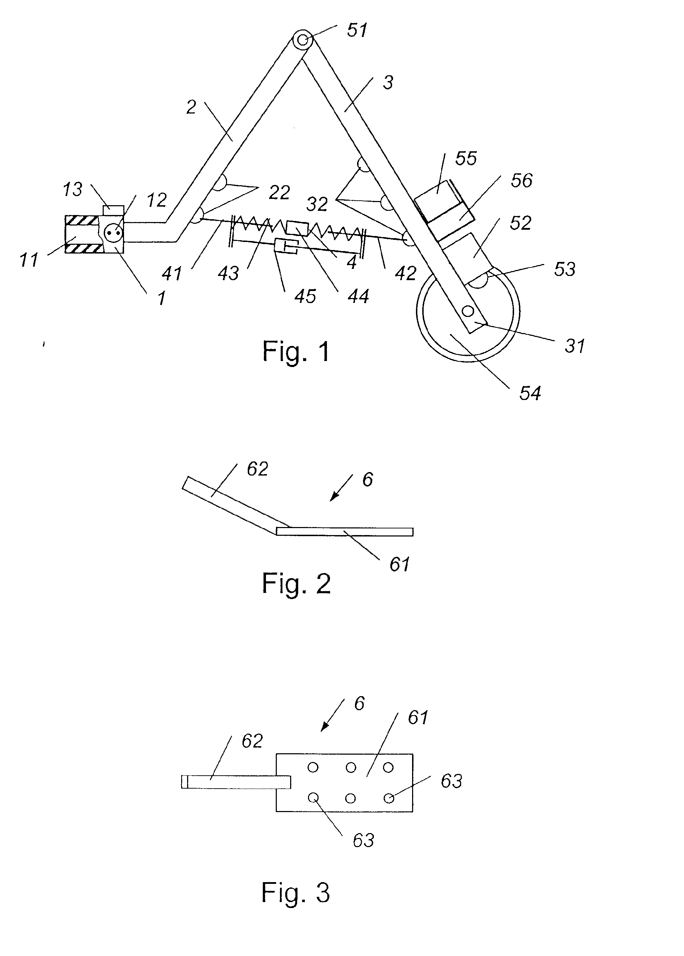

In Fig. 1 ist eine Anschubvorrichtung mit einer Befestigungsvorrichtung 1, welche mit einem ersten Hebelarm 2 verbunden ist, einem Antriebsmittel 54, welches von einer Antriebseinheit 52 antreibbar ist, und einem zweiten Hebelarm 3 dargestellt. Das Antriebsmittel 54 ist mit einem Ende 31 des zweiten Hebelarms 3 verbunden, wobei der erste Hebelarm 2 und der zweite Hebelarm 3 mittels eines Gelenkes 51 miteinander verbunden sind. Der erste Hebelarm 2 und der zweite Hebelarm 3 sind mittels einer Spannvorrichtung 4 gegeneinander spannbar.

Gemäß Fig. 1 kann die Spannvorrichtung 4 eine mit dem ersten Hebelarm 2 im wesentlichen gelenkig und um die Längsachse drehfest verbundene erste Gewindestange 41 und eine mit dem zweiten Hebelarm 3 im wesentlichen gelenkig und um die Längsachse drehfest verbundene zweite Gewindestange 42 aufweist, wobei die erste Gewindestange 41 ein Rechtsgewinde und die zweite Gewindestange 42 ein Linksgewinde aufweist. Es kann auch die erste Gewindestange 41 ein Linksgewinde und die zweite Gewindestange 42 ein Rechtsgewinde aufweisen. Weiters ist ein Federelement 43 vorgesehen, welches drehbar mit der ersten Gewindestange 41 und der zweiten Gewindestange 42 verbunden ist. Das Federelement 43 kann eine Schraubenfeder sein, welche endseitig jeweils eine Mutter od. dgl. aufweist.

Um das Spannelement 4 einfach und schnell spannen oder lösen zu können, kann ein Einstellelement 44 vorgesehen sein, wobei insbesondere ein Ratschenelement, ein Elektromotor od. dgl. als Einstellelement 44 geeignet erscheinen. Der Griff des Ratschenelementes kann dabei parallel zur Längsrichtung des Federelementes 43 klappbar ausgeführt sein.

Zur die Begrenzung des Federweges des Federelementes 43 kann weiters ein Dämpferelement 45 vorgesehen sein. Dadurch werden Schwingen der erfindungsgemäßen Anschubvorrichtung und übermäßige Stauchungen und/oder Dehnungen des Federelementes 43 unterbunden. Die Spannvorrichtung 4 kann auch einen verstellbaren elastischen Gurt, eine Teleskopstange, eine Gewindestange und ein darauf bewegbares Ritzel od. dgl. umfassen.

Die Spannvorrichtung 4 kann mit dem ersten Hebelarm 2 lösbar an wenigstens zwei Positionen 22 des ersten Hebelarms 2 festlegbar sein. Dadurch kann die erfindungsgemäße Anschubvorrichtung an verschiedene anzuschiebende Gegenstände adaptiert werden Weiters kann nach dem Lösen der Spannvorrichtung 4 vorgesehen sein, daß der erste Hebelarm 2 auf die andere Seite des zweiten Hebelarms 3 klappbar ist, wodurch eine besonders kompakte Form der erfindungsgemäßen Anschubvorrichtung für die Lagerung und/oder den Transport erreicht werden kann. Dies kann auch erreicht werden, wenn die Spannvorrichtung 4 mit dem zweiten Hebelarm 3 lösbar an wenigstens zwei Positionen 32 des zweiten Hebelarms 3 festlegbar ist.

Die Adaption an verschiedene anzuschiebende Gegenstände kann auch dadurch erfolgen, daß der zweite Hebelarm 3 als Teleskopstange ausgebildet ist.

Die Befestigungsvorrichtung 1 kann eine stirnseitige Ausnehmung 11 aufweisen, mit der sie auf einfache Weise mit einem gegengleichen Halteelement 62 lösbar verbindbar ist. Die Ausnehmung 11 ist dabei vorzugsweise so ausgestaltet, daß die Anschubvorrichtung um die Längsrichtung der stirnseitigen Ausnehmung 11 drehfest mit dem Halteelement 62 verbindbar ist. Dies kann z.B. durch einen im wesentlichen rechteckigen Querschnitt der stimseitigen Ausnehmung 11 sichergestellt werden.

Im Bereich der Befestigungsvorrichtung 1 kann ein erster Anschluß 12 an einen externen Energiespeicher und/oder ein zweiter Anschluß 13 für eine Fernbedienung der Antriebseinheit 52 vorgesehen sein. Die Fernbedienung der Antriebseinheit 52 kann auch mittels Funk od. dgl. erfolgen.

Anstelle des ersten Anschlusses 12 oder in Kombination mit diesem kann eine Halterung 56 für einen Energiespeicher 55 vorgesehen sein, wobei der Energiespeicher 55 vorzugsweise lösbar mit der Halterung 56 verbindbar ist. Dadurch kann der Energiespeicher 55 ausgetauscht werden und gegebenenfalls an einer externen Ladestation aufgefüllt werden. Besteht der Energiespeicher 55 aus einem Benzintank od. dgl. kann er auch im mit der Halterung 56 verbundenen Zustand wieder befüllt werden.

Zwischen der Antriebseinheit 52 und dem Antriebsmittel 54 kann ein Getriebe 53 angeordnet sein. Insbesondere kann das Getriebe 53 ein mit der Antriebseinheit 52 verbundenes Ritzel und ein mit dem Antriebsmittel 54 verbundenes Zahnrad, insbesondere einen Ring od. dgl. mit einer Innenverzahnung, umfassen. Dadurch kann die Leistung der Antriebseinheit 52 auf das Antriebsmittel 54 auf einfache Weise und mit einem hohen Wirkungsgrad übertragen werden. Das Antriebsmittel kann als Rad 52 und/oder als Kettenantrieb ausgebildet sein, wobei der Ring mit der Innenverzahnung einstückig mit dem Antriebsmittel 52 verbunden sein.

Durch das Spannelement 4 kann der erforderliche Anpreßdruck des Antriebsmittels 54 am Untergrund erreicht werden, wodurch ein Durchrutschen des Antriebsmittels 54 vermieden wird. Ist das Antriebsmittel 54 als Rad ausgeführt, kann die Reibung gegenüber dem Untergrund durch die Profilierung des Rades verbessert werden. Weiters kann vorgesehen sein, daß eine Kette od. dgl. auf das Rad aufbringbar ist.

Für die Antriebseinheit 52 scheint ein Motor, insbesondere ein Elektromotor, geeignet zu sein. In anderen Ausführungsformen kann die Antriebseinheiten 52 auch als Dampfmaschine od. dgl. ausgebildet sein, wobei sich die Art der Antriebseinheit 52 nach einem vorhandenen Energiespeicher 55 richten kann.

Der anzuschiebende Gegenstand weist eine Haltevorrichtung 6 mit dem Halteelement 62 zur lösbaren Aufnahme der Befestigungsvorrichtung 1 der erfindungsgemäßen Anschubvorrichtung auf, wobei die Haltevorrichtung 6 einstückig mit dem anzuschiebenden Gegenstand verbunden sein kann. Gemäß der in den Fig. 2 und 3 gezeigten Ausführungsform der Haltevorrichtung 6 kann ein Befestigungselement 61 vorgesehen sein, welches mit dem anuzuschiebenden Gegenstand verbindbar ist, wobei die Verbindung lösbar oder unlösbar sein kann. Vorzugsweise wird die Haltevorrichtung 6 mit dem anzuschiebenden Gegenstand verschweißt, vernietet, verschraubt od. dgl., wodurch eine stabile Verbindung erreicht wird. Es kann aber auch vorgesehen sein, daß die Haltevorrichtung 6 auf einen Teil des anzuschiebenden Gegenstandes aufgesteckt wird od. dgl., um auch einen Gegenstand ohne montierter Haltevorrichtung 6 schnell aus einem Gefahrenbereich bringen zu können.

Gemäß einer bevorzugten Ausführungsform der Erfindung kann der anzuschiebende Gegenstand ein Kraftfahrzeug sein, wobei die Haltevorrichtung 6 mit der Bodenplatte oder dem Rahmen im hinteren Bereich und/oder im vorderen Bereich des Kraftfahrzeuges verbunden ist, wobei das Halteelement 62 zugänglich ist, um die Befestigungsvorrichtung 1 auf einfache Weise mit dem Halteelement 62 verbinden zu können.

Es kann auch vorgesehen sein, daß das Halteelement 62 kippbar ausgeführt wird, sodaß es im Bedarfsfall von einer Position, in der es nicht sichtbar ist in eine sichtbare und leicht zugängliche Position schwenkbar ist. Die Schwenkbewegung kann z.B. mittels eines Hebels im Kofferraum durchgeführt werden.

Der erste Anschluß 12 kann mit der Lichtmaschine, der Batterie oder einer Zusatzbatterie verbunden sein, falls die Antriebseinheit 52 ein Elektromotor ist. Die Zusatzbatterie kann im Kofferraum untergebracht sein, wobei sie vorzugsweise mit einem mit der Lichtmaschine gekoppelten Ladegerät verbunden ist. Ist kein erster Anschluß 12 vorgesehen, kann die Zusatzbatterie lösbar mit dem Ladegerät verbunden sein, wobei sie zum Betrieb der erfindungsgemäßen Anschubvorrichtung aus dem Ladegerät genommen und mit der Halterung 56 verbunden werden kann.

Der zweite Anschluß 13 ist mit einer Fernbedienung verbunden, welche vom Fahrersitz aus zugänglich ist. Dadurch kann eine Bedienperson sowohl die Anschubvorrichtung betätigen als auch das anzuschiebende Kraftfahrzeug lenken. Bei einer Panne reicht es aus, wenn die Bedienperson das Kraftfahrzeug kurzfristig verläßt, um die Anschubvorrichtung mit dem Halteelement 62 zu verbinden und gegebenenfalls das Einstellelement 44 der Spannvorrichtung 4 zu betätigen. Anschließend kann die Bedienperson den Gefahrenbereich wieder verlassen und in das Kraftfahrzeug steigen, sodaß sich keine Personen während des Anschiebens sich ungeschützt außerhalb des Kraftfahrzeuges aufhalten müssen. Die Anschubvorrichtung kann besonders schnell und einfach mit dem Halteelement 62 verbunden werden wenn diese nur aufgesteckt werden muß und der erste Anschluß 12 und der zweite Anschluß 13 als Steckkontakte ausgebildet sind, welche aufgrund ihrer Anordnung und Ausrichtung bei dem Aufstecken betätigt werden, sodaß nach dem Aufstecken kein gesondertes Anschließen des ersten Anschlusses 12 und/oder des zweiten Anschlusses 13 erforderlich ist. Weiters kann das Einstellelement 44 der Spannvorrichtung 4 auch fembedienbar sein, insbesondere wenn es einen Elektromotor umfaßt.

Aufgrund der kompakten Bauweise der erfindungsemäßen Anschubvorrichtung kann diese leicht in einem Kofferraum od. dgl. verstaut werden und stets mitgeführt werden. Ein Nachrüsten eines Kraftfahrzeuges mit einer Haltevorrichtung kann einfach durchgeführt werden. Aufgrund der oben beschriebenen Einstellmöglichkeiten der Anschubvorrichtung kann sie bei verschiedenen Kraftfahrzeugen, z.B. Pkws, Busse od. dgl., verwendet werden und einfach an das jeweilige Kraftfahrzeug angepaßt werden.

Durch die erfindungsgemäße Anschubvorrichtung kann ein Kraftfahrzeug schnell aus einem Gefahrenbereich entfernt werden. Dabei ist die Anschubvorrichtung einfach und schnell mit dem Kraftfahrzeug verbindbar, wobei während des Anschiebens keine Person außerhalb des Kraftfahrzeuges sein muß und dadurch das Kraftfahrzeug für alle Personen eine Schutzwirkung ausüben kann. Dies ist insbesondere bei unübersichtlichen Kurven, Tunnels, Brücken, Baustellen, engen Fahrbahnen od. dgl. ein Vorteil. Weiters ist die Geschwindigkeit des Anschiebens nicht auf Schrittgeschwindigkeit beschränkt, sodaß ein Kraftfahrzeug schnell aus einer Gefahrenzone gebracht werden kann.

Die erfindungsgemäße Anschubvorrichtung kann auch bei einer langsamen Fahrt, z.B. in einem Stau od. dgl. eingesetzt werden, wodurch der Treibstoffverbrauch des Kraftfahrzeuges gesenkt wird. In diesem Zusammenhang kann vorgesehen sein, daß das Antriebsmittel 54 fembedienbar vom Boden abhebbar ist. Dies kann z.B. durch das Einstellelement 44 und/oder eine Veränderung der Länge des zweiten Hebelarms 3 erfolgen.

Nach dem Gebrauch kann die erfindungsgemäße Anschubvorrichtung einfach und schnell von dem Halteelement 62 gelöst und verstaut werden.

## Patentansprüche

1. Anschubvorrichtung mit einer Befestigungsvorrichtung (1), welche mit einem ersten Hebelarm (2) verbunden ist, einem Antriebsmittel (54), welches von einer Antriebseinheit (52) antreibbar ist, und einem zweiten Hebelarm (3), **dadurch gekennzeichnet, daß** der erste Hebelarm (2) und der zweite Hebelarm (3) mittels eines Gelenkes (51) miteinander verbunden sind, wobei das Antriebsmittel (54) mit einem Ende (31) des zweiten Hebelarmes (3) verbunden ist, und daß der erste Hebelarm (2) und der zweite Hebelarm (3) mittels einer Spannvorrichtung (4) gegeneinander spannbar sind.

2. Anschubvorrichtung nach Anspruch 1, **dadurch gekennzeichnet, daß** die Spannvorrichtung (4) eine mit dem ersten Hebelarm (2) im wesentlichen gelenkig und um die Längsachse drehfest verbundene erste Gewindestange (41) und eine mit dem zweiten Hebelarm (3) im wesentlichen gelenkig und um die Längsachse drehfest verbundene zweite Gewindestange (42) aufweist, wobei die erste Gewindestange (41) ein Rechtsgewinde und die zweite Gewindestange (42) ein Linksgewinde oder die erste Gewindestange (41) ein Linksgewinde und die zweite Gewindestange (42) ein Rechtsgewinde aufweisen, und daß ein Federelement (43), insbesondere eine Schraubenfeder od. dgl., vorgesehen ist, welches drehbar mit der ersten Gewindestange (41) und der zweiten Gewindestange (42) verbunden ist.

3. Anschubvorrichtung nach Anspruch 2, **dadurch gekennzeichnet, daß** mit dem Federelement (43) ein Einstellelement (44), insbesondere ein Ratschenelement, ein Elektromotoer od. dgl., verbunden ist.

4. Anschubvorrichtung nach Anspruch 1, 2 oder 3, **dadurch gekennzeichnet, daß** ein Dämpferelement (45) zur die Begrenzung des Federweges des Federelementes (43) vorgesehen ist.

5. Anschubvorrichtung nach einem der Ansprüche 1 bis 4, **dadurch gekennzeichnet, daß** die Spannvorrichtung (4) mit dem ersten Hebelarm (2) lösbar an wenigstens zwei Positionen (22) des ersten Hebelarms (2) und/oder die Spannvorrichtung (4) mit dem zweiten Hebelarm (3) lösbar an wenigstens zwei Positionen (32) des zweiten Hebelarms (3) festlegbar ist.

6. Anschubvorrichtung nach einem der Ansprüche 1 bis 5, **dadurch gekennzeichnet, daß** die Befestigungsvorrichtung (1) eine stirnseitige Ausnehmung (11) aufweist.

7. Anschubvorrichtung nach einem der Ansprüche 1 bis 6, **dadurch gekennzeichnet, daß** im Bereich der Befestigungsvorrichtung (1) ein erster Anschluß (12) an einen externen Energiespeicher, insbesondere einer Batterie eines Kraftfahrzeuges, einer Lichtmaschine od. dgl., und/oder ein zweiter Anschluß (13) für eine Fernbedienung der Antriebseinheit (52) vorgesehen ist.

8. Anschubvorrichtung nach einem der Ansprüche 1 bis 7, **dadurch gekennzeichnet, daß** der zweite Hebelarm (2) als Teleskopstange ausgebildet ist.

9. Anschubvorrichtung nach einem der Ansprüche 1 bis 8, **dadurch gekennzeichnet, daß** eine Halterung (56) für einen Energiespeicher (55) vorgesehen ist.

10. Anschubvorrichtung nach einem der Ansprüche 1 bis 9, **dadurch gekennzeichnet, daß** ein Getriebe (53) zwischen dem Antriebsmittel (54) und der Antriebseinheit (52) angeordnet ist.

11. Anschubvorrichtung nach einem der Ansprüche 1 bis 10, **dadurch gekennzeichnet, daß** das Antriebsmittel (52) als Rad und/oder als Kettenantrieb ausgebildet ist.

12. Anschubvorrichtung nach einem der Ansprüche 1 bis 11, **dadurch gekennzeichnet, daß** die Antriebseinheit (52) als Motor, insbesondere als Elektromotor, ausgebildet ist.

13. Haltevorrichtung (5) für eine Anschubvorrichtung nach einem der Ansprüche 1 bis 12, **dadurch gekennzeichnet, daß** ein Befestigungselement (61) zum Befestigen an einem anzuschiebenden Gegenstand, insbesondere der Bodenplatte oder dem Rahmen eines Kraftfahrzeuges, einer Hebebühne od. dgl., und ein Halteelement (62) zur lösbaren Verbindung mit der Befestigungsvorrichtung (1) der Anschubvorrichtung vorgesehen ist.
